# EUROPEAN PATENT APPLICATION

(11) **EP 4 848 847 A1**
(43) Date of publication of application: **02.12.2026**
(21) Application number: 25745449.6
(22) Date of filing: 14.01.2025
(51) Int. Cl.: H04W 64/00, H04W 24/08, G01S 13/00, G01S 13/88, H04B 7/06, H04B 7/08, H04L 5/00, H04W 92/18

(54) **METHOD AND APPARATUS FOR TRANSMITTING AND RECEIVING SENSING SIGNAL FOR ISAC**

(30) Priority: 24.01.2024 KR 20240010576; 24.01.2024 KR 20240010579
(71) Applicant: LG Electronics Inc., Yeongdeungpo-gu Seoul 07336 (KR)
(72) Inventor: KO, Woosuk, Seoul 06772 (KR)
(74) Representative: Mooser, Sebastian Thomas
(86) International application number: PCT/KR2025/000780
(87) International publication number: WO 2025/159431

(57) **Abstract**

Provided are a method by which a first device communicates wirelessly and an apparatus supporting same. The method may comprise the steps of: receiving control information from a second device; and receiving a sensing signal related to the control information. For example, the control information may include information related to a target sensing area.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free internet of things (IoT) devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. For example, Table 1 may show an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: receiving, from a second device, control information; and receiving a sensing signal related to the control information. For example, the control information may include information related to a target sensing area.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: receiving, from a second device, control information; and receiving a sensing signal related to the control information. For example, the control information may include information related to a target sensing area.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: receiving, from a second device, control information; and receiving a sensing signal related to the control information. For example, the control information may include information related to a target sensing area.

In one embodiment, provided is a non-transitory computer-readable storage medium recording instructions. For example, the instructions, based on being executed, cause a first device to perform operations comprising: receiving, from a second device, control information; and receiving a sensing signal related to the control information. For example, the control information may include information related to a target sensing area.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure providable in a 6G system, based on an embodiment of the present disclosure.
FIG. 7 shows an example of a communication scenario based on a 6G system, based on an embodiment of the present disclosure.
FIG. 8 shows an example of a sensing operation, based on an embodiment of the present disclosure.
FIG. 9 shows a method for transmitting and receiving a sensing signal, based on an embodiment of the present disclosure.
FIG. 10 shows a method for transmitting and receiving a sensing signal, based on an embodiment of the present disclosure.
FIG. 11 shows a method for performing wireless communication by a first device, based on an embodiment of the present disclosure.
FIG. 12 shows a method for performing wireless communication by a second device, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

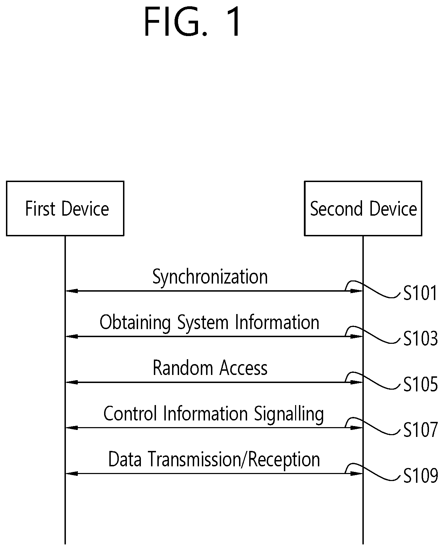

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

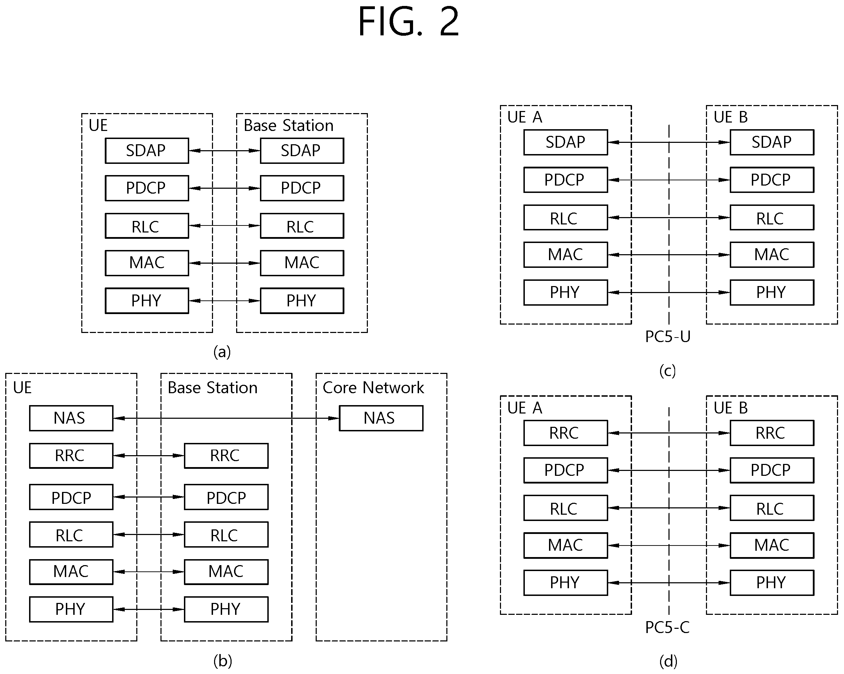

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, i.e., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, re-configuration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

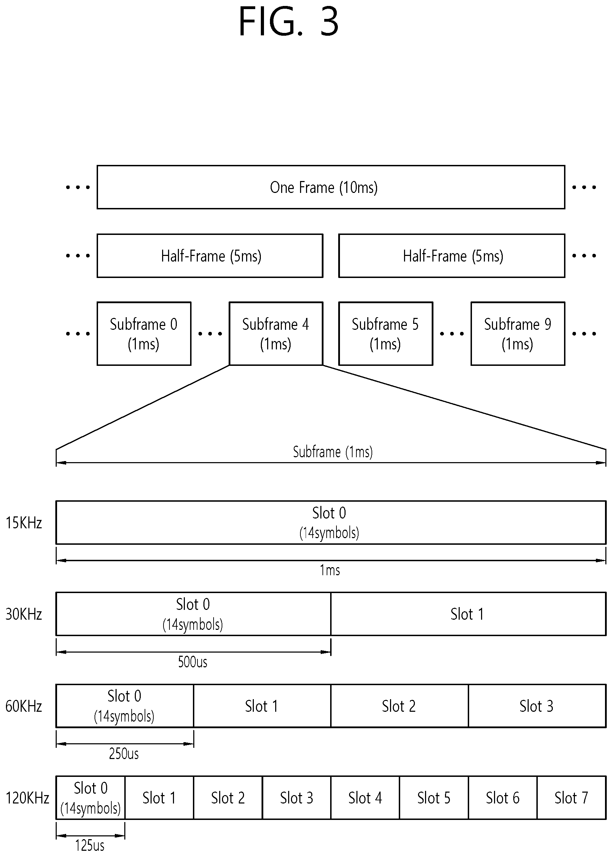

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

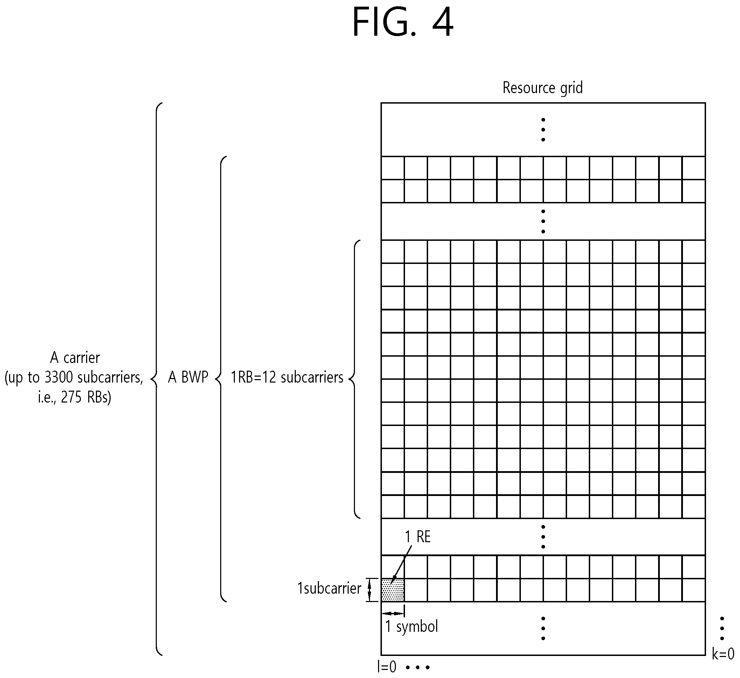

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

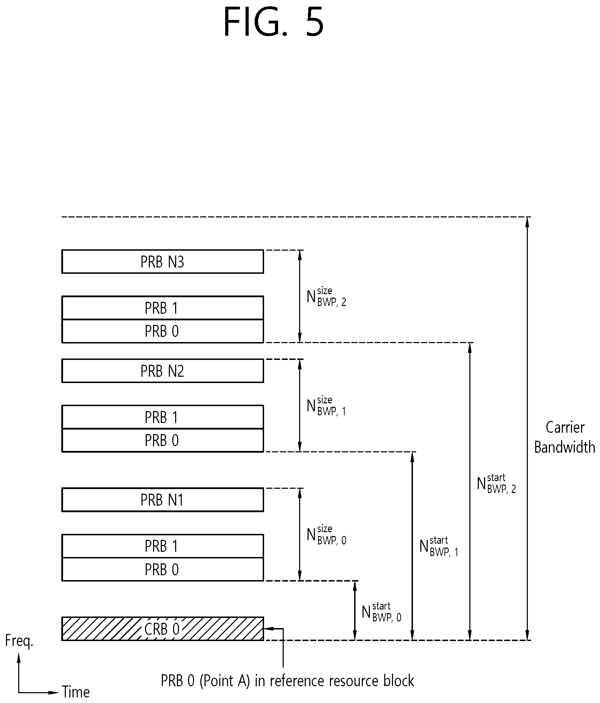

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

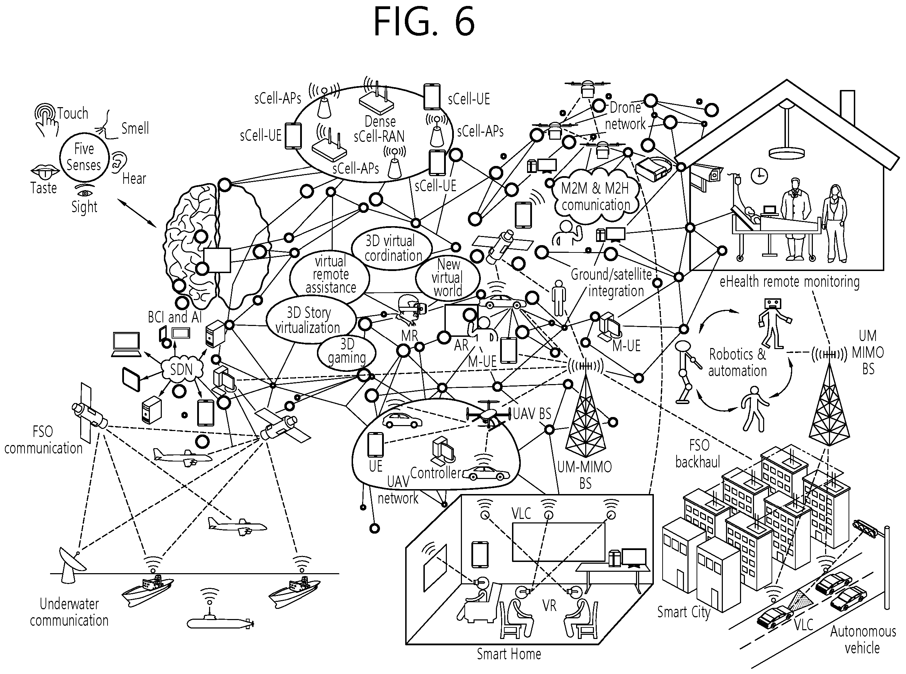

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC)
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

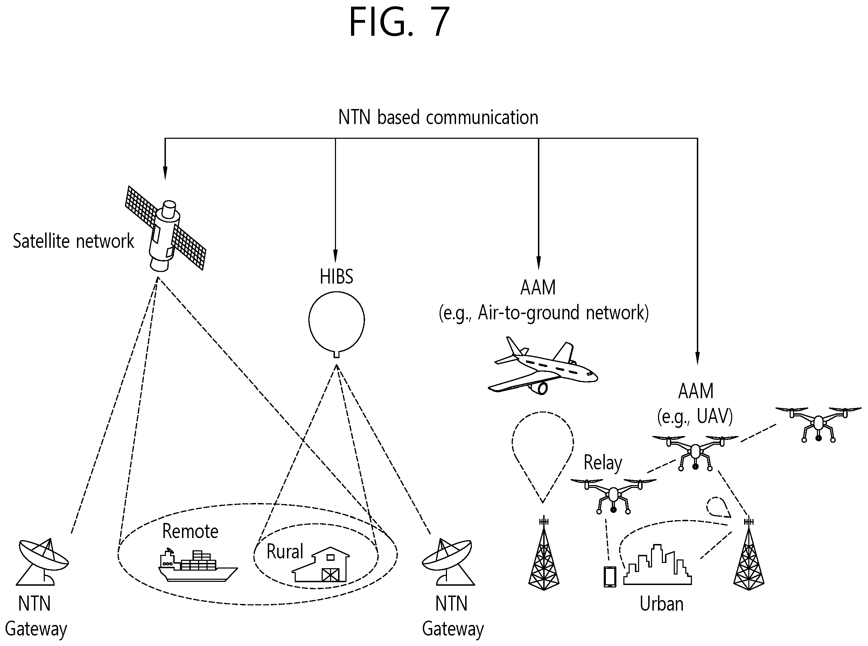

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

Hereinafter, integrated sensing and communication (ISAC) described above will be described in detail.

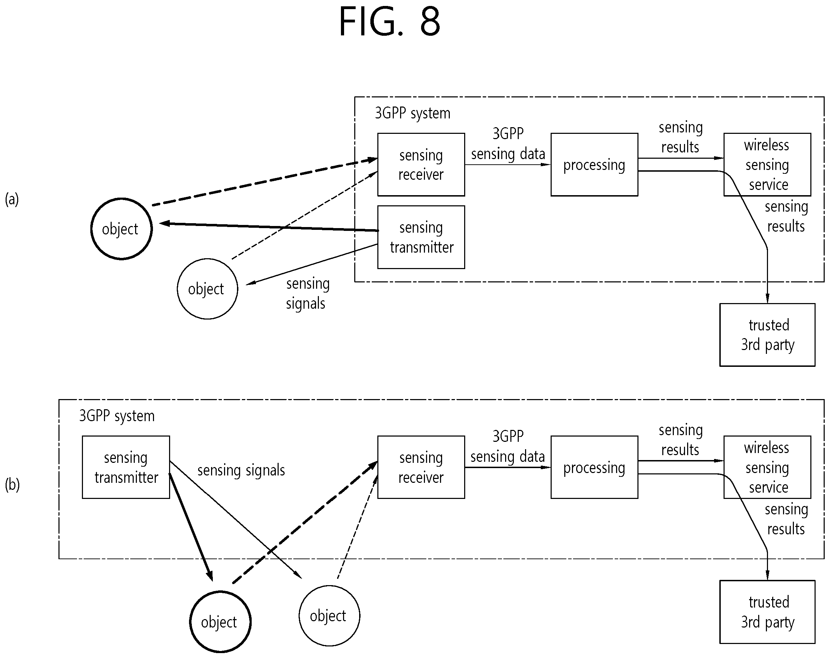

Integrated sensing and communication (ISAC) is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 8 shows an example of a sensing operation, based on an embodiment of the present disclosure. The embodiment of FIG. 8 may be combined with various embodiments of the present disclosure. Specifically, (a) of FIG. 8 illustrates an example of sensing using a sensing receiver and a sensing transmitter at the same location (e.g., monostatic sensing), and (b) of FIG. 8 illustrates an example of sensing using separate sensing receivers and sensing transmitters (e.g., bistatic sensing).

The present disclosure may be applied to an operation for positioning and/or an operation for integrated sensing and communication (ISAC).

The following terms may be used in the present disclosure.

For example, the following "PRS" or "SL PRS" may be interpreted/applied by being replaced with a "sensing signal" or a "sensing reference signal (RS)".
- LMF: location management function
- SL positioning triggered by a UE (UE-triggered SL positioning): SL sidelink (SL) positioning in which a procedure is triggered by a UE
- SL positioning triggered by a base station/LMF: SL positioning in which a procedure is triggered by a base station/LMF
- SL positioning controlled by a UE (UE-controlled SL positioning): SL positioning in which an SL positioning group is generated by a UE
- SL positioning controlled by a base station: SL positioning in which an SL positioning group is generated by a base station
- SL positioning based on a UE (UE-based SL positioning): SL positioning in which a UE position is calculated by a UE
- SL positioning assisted by a UE (UE-assisted SL positioning): SL positioning in which a UE position is calculated by a base station/LMF
- SL positioning group: UEs participating in SL positioning
- target UE (T-UE): a UE whose position is calculated
- server UE (S-UE): a UE that assists positioning of the T-UE
- Anchor UE: a UE that assists positioning of the T-UE
- measurement gap (MG): a measurement gap where only SL PRS transmission is allowed
- measurement window (MW): a measurement window where SL data and SL PRS may be transmitted in a multiplexed way
- SL PRS: sidelink positioning reference signal
- control channel (CCH): control channel
- inter-UE coordination (IUC) message: a message received by a TX UE from another UE including an RX UE, and including information on a preferred resource set suitable for transmission by the TX UE to the RX UE and/or information on a non-preferred resource set unsuitable for transmission
- sensing reference signal (RS): a reference signal used for measurement for a sensing purpose
- BS-BS sensing: sensing in which BS#1 transmits a sensing RS and BS#2 receives the sensing RS. For example, when the BS#1 and the BS#2 are separate BSs from each other, the BS-BS sensing may mean a BS-BS bi-static sensing operation. For example, when the BS#1 and the BS#2 are the same BS, the BS-BS sensing may mean a BS-BS mono-static sensing operation. For example, the BS may be a base station or a transmission and reception point (TRP). For example, when the BS#1 and/or the BS#2 is one or more BSs, the BS-BS sensing may mean a BS-BS multi-static sensing operation.
- BS-UE sensing: sensing in which a BS transmits a sensing RS and a UE receives the sensing RS. For example, the BS may be a base station or a transmission and reception point (TRP). For example, when the BS and/or the UE is one or more BSs and/or one or more UEs, the BS-UE sensing may mean a BS-UE multi-static sensing operation.
- UE-BS sensing: sensing in which a UE transmits a sensing RS and a BS receives the sensing RS. For example, the BS may be a base station or a transmission and reception point (TRP). For example, when the BS and/or the UE is one or more BSs and/or one or more UEs, the UE-BS sensing may mean a UE-BS multi-static sensing operation.
- UE-UE sensing: sensing in which UE#1 transmits a sensing RS and UE#2 receives the sensing RS. For example, when the UE#1 and UE#2 are separate UEs from each other, the UE-UE sensing may mean a UE-UE bi-static sensing operation. For example, when the UE#1 and UE#2 are the same UE, the UE-UE sensing may mean a UE-UE mono-static sensing operation. For example, the BS may be a base station or a transmission and reception point (TRP). For example, when the UE#1 and/or the UE#2 is one or more UEs, the UE-UE sensing may mean a UE-UE multi-static sensing operation.
- SMF: sensing management function
- TSA: target sensing area

For example, an SL PRS transmission resource may be configured as an SL PRS resource set configured with the following information.
- SL PRS resource set ID
- SL PRS resource ID list: an SL PRS resource ID list in an SL PRS resource set
- SL PRS resource type: may be configured as periodic or aperiodic or semi-persistent or on-demand
- alpha for SL PRS power control
- P0 for SL PRS power control
- path loss reference for SL PRS power control: may be configured as SL SSB or DL PRS or UL SRS or UL SRS for positioning or PSCCH DMRS or PSSCH DMRS or PSFCH or SL CSI RS, etc.

For example, the SL PRS resource set may be configured with an SL PRS resource configured with the following information.
- SL PRS resource ID
- SL PRS comb size: an interval between REs in which SL PRS is transmitted in a symbol
- SL PRS comb offset: an RE index at which SL PRS is first transmitted in a first SL PRS symbol
- SL PRS comb cyclic shift: a cyclic shift used for generating a sequence configuring SL PRS
- SL PRS start position: a first symbol index for transmitting SL PRS in one slot
- the number of SL PRS symbols: the number of symbols configuring SL PRS in one slot
- frequency domain shift: the lowest frequency position in which SL PRS is transmitted in a frequency domain
- SL PRS BW: a frequency bandwidth used for SL PRS transmission
- SL PRS resource type: may be configured as periodic or aperiodic or semi-persistent or on-demand
- SL PRS periodicity: a periodicity in a time domain between SL PRS resources, in a unit of a physical slot or a logical slot in a resource pool in which SL PRS is transmitted
- SL PRS offset: an offset in a time domain from reference timing to a start time of a first SL PRS resource, in a unit of a physical slot or a logical slot in a resource pool in which SL PRS is transmitted. The reference timing may be SFN=0 or DFN=0 or a time point at which reception or decoding of RRC/MAC-CE/DCI/SCI related to the SL PRS resource is successful.
- SL PRS sequence ID
- SL PRS spatial relation: may be configured as SL SSB or DL PRS or UL SRS or UL SRS for positioning or PSCCH DMRS or PSSCH DMRS or PSFCH or SL CSI RS, etc.
- SL PRS CCH: SL PRS control channel. SL PRS CCH may signal SL PRS resource configuration information and resource locations, etc.

Meanwhile, in prior art, a procedure for performing bi-static sensing based on designating a reception entity has not been defined. Therefore, it is necessary to define a sensing operation designating an Rx entity that will receive a sensing reference signal (RS). Additionally, according to the prior art, even if a Tx entity transmits a sensing reference signal (RS) to TSA to perform sensing for the TSA and the sensing reference signal (RS) is reflected from the TSA and transmitted to Rx entities around the TSA, if an Rx entity does not know information related to the TSA of the sensing reference signal (RS), the following problems may occur. For example, since the Rx entity should perform monitoring for all directions to receive the sensing reference signal (RS), power consumption of the Rx entity may increase. In this case, for example, since a signal transmitted from a direction other than a direction related to the TSA is also received by the Rx entity, quality related to reception of the sensing reference signal (RS) by the Rx entity may be degraded. Additionally, for example, when the Rx entity performs a beam-based operation, if the Rx entity does not know the information related to the TSA, efficiency of operation(s) related to beam management, such as beam forming or beam selection, for receiving the sensing reference signal (RS) reflected and transmitted from the TSA may be lowered.

In the present disclosure, a sensing method performed based on designation of an Rx entity that will receive a sensing RS and a device supporting the same are proposed.

For example, in performing bi-static sensing, when the sensing is performed after a Tx entity that has transmitted a sensing RS designates a target Rx entity that will receive the sensing RS reflected by an object, the Tx entity and the Rx entity may perform bi-static sensing according to the following method.

For example, the Tx entity may transmit the sensing RS by limiting only a target sensing area (TSA) without limiting the Rx entity. For example, an Rx entity (e.g., BS or UE) that has received the sensing RS transmitted in the limited TSA direction may report a sensing result related to the sensing RS to the Tx entity (e.g., BS or UE) that has transmitted the sensing RS. For example, a control channel related to the transmitted sensing RS may include the limited TSA information. For example, the Rx entity that has received the control channel may determine whether to receive the sensing RS based on the TSA information. For example, the Rx entity that has received the control channel may determine a reception beam forming parameter for receiving the sensing RS based on the TSA information. For example, the reception beam forming parameter may include a beam direction and/or a beam width. For example, the Rx entity that has received the sensing RS may report a sensing result related to the sensing RS to a sensing management function (SMF) and/or the Tx entity that has transmitted the sensing RS. For example, the report may include the TSA information and/or ID information related to the Tx entity and/or ID information related to the Rx entity.

For example, the Tx entity may transmit the sensing RS by limiting the Rx entity and without limiting TSA. For example, the Rx entity may request transmission of a sensing RS from SMF and/or a Tx entity that will transmit the sensing RS. For example, the SMF that has received the request may request transmission of a sensing RS from a BS and/or UE around the Rx entity. For example, a control channel related to the sensing RS transmission may include an ID related to the Rx entity (e.g., BS ID (e.g., cell ID or TRP ID) or UE ID). For example, the Tx entity requested to transmit the sensing RS may transmit the sensing RS in a direction of the Rx entity and/or in a direction around the Rx entity. For example, when the Tx entity transmits the sensing RS based on beam forming, the Tx entity may determine the beam width based on the direction of the Rx entity and TSA related to the direction, and transmit it. For example, the beam width may be requested together by the Rx entity while requesting transmission of the sensing RS. For example, the beam width may be (pre-)configured or defined (in a resource pool). For example, whether beam forming-based transmission is performed and/or the beam width may be determined based on a capability of the Tx entity. For example, the Rx entity that has received the sensing RS may report a sensing result related to the sensing RS to SMF and/or the Tx entity that has transmitted the sensing RS. For example, the report may include ID information related to the Tx entity and/or ID information related to the Rx entity.

For example, the Tx entity may transmit the sensing RS by limiting the Rx entity and TSA. For example, the Rx entity may transmit TSA information to SMF and/or a Tx entity that will transmit a sensing RS, and may request transmission of the sensing RS in the TSA direction. For example, the SMF that has received the request may request transmission of a sensing RS from a BS and/or UE around the Rx entity. For example, a control channel related to transmission of the sensing RS may include both an ID related to the Rx entity (e.g., BS ID (e.g., cell ID or TRP ID) or UE ID) and the TSA information. For example, the Tx entity requested to transmit the sensing RS may transmit the sensing RS in the TSA direction. For example, when the Tx entity transmits the sensing RS based on beam forming, a beam width of the sensing RS may be determined based on the TSA information. For example, the Rx entity that has received the sensing RS may report a sensing result related to the sensing RS to SMF and/or the Tx entity that has transmitted the sensing RS. For example, the report may include the TSA information and/or ID information related to the Tx entity and/or ID information related to the Rx entity.

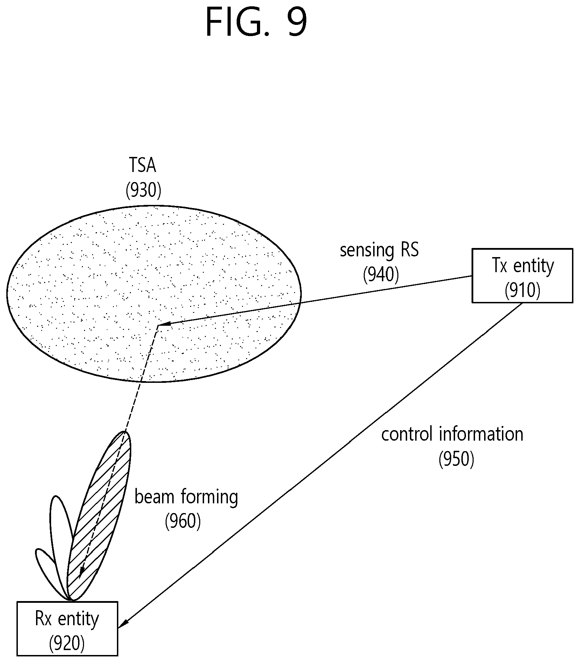

FIG. 9 shows a method for transmitting and receiving a sensing signal, based on an embodiment of the present disclosure. The embodiment of FIG. 9 may be combined with various embodiments of the present disclosure.

Referring to FIG. 9, a Tx entity (e.g., Tx BS or Tx UE) 910 and an Rx entity (e.g., Rx BS or Rx UE) 920 may perform a bi-static sensing operation. For example, the Tx entity 910 may transmit a sensing reference signal (RS) 940 in a direction of a target sensing area (TSA) 930 to sense the TSA 930. For example, before transmitting the sensing RS 940 in the direction of the TSA 930, the Tx entity 910 may transmit information related to the TSA 930 to the Rx entity 920. In this case, for example, the information related to TSA, which is transmitted by the Tx entity 910 to the Rx entity 920, may be included in control information 950 and transmitted. For example, when the Tx entity 910 performs wireless communication based on at least one of unicast, groupcast, or broadcast, the information related to TSA may be transmitted based on a resource/channel configured for the wireless communication. For example, the information related to TSA may be included in control information 950 transmitted through a control channel among channels for the wireless communication and transmitted.

Additionally, for example, when the Tx entity 910 performs a beam-based operation, the sensing RS 940 may be transmitted through a beam determined based on beam forming of the Tx entity 910. In this case, for example, a width of a beam for transmitting the sensing RS 940 of the Tx entity 910 may be configured based on a direction from the Tx entity 910 to the Rx entity 920. Alternatively, for example, a width of a beam for transmitting the sensing RS 940 of the Tx entity 910 may be configured based on the TSA 930 related to a direction from the Tx entity 910 to the Rx entity 920. Alternatively, for example, a width of a beam for transmitting the sensing RS 940 of the Tx entity 910 may be configured based on (i) a direction from the Tx entity 910 to the Rx entity 920 and (ii) the TSA 930 related to the direction from the Tx entity 910 to the Rx entity 920.

Meanwhile, the Rx entity 920 may receive the sensing RS 940. For example, before receiving the sensing RS 940, the Rx entity 920 may receive control information 950 from the Tx entity 910. In this case, for example, the control information 950 may include information related to the TSA 930. Specifically, for example, the Rx entity 920 may first receive the control information 950 from the Tx entity 910, and then receive the sensing RS 940 based on the information related to TSA included in the control information 950.

Additionally, for example, when the Rx entity 920 performs a beam-based operation, the Rx entity 920 may receive the sensing RS 940 through a beam determined based on beam forming 960. For example, before receiving the sensing RS 940, the Rx entity 920 may receive control information 950 from the Tx entity 910. In this case, for example, the control information 950 may include information related to the TSA 930. Specifically, for example, the Rx entity 920 may first receive the control information 950 from the Tx entity 910, and then perform the beam forming 960 based on the information related to TSA included in the control information 950. In this case, for example, a width or a direction of the beam determined based on the beam forming 960 may be configured based on the information related to TSA.

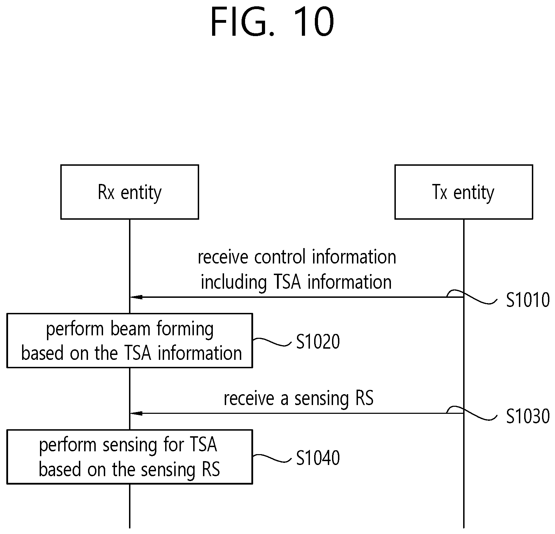

FIG. 10 shows a method for transmitting and receiving a sensing signal, based on an embodiment of the present disclosure. The embodiment of FIG. 10 may be combined with various embodiments of the present disclosure.

Referring to FIG. 10, in step S1010, the Rx entity may receive control information from the Tx entity. In this case, for example, the control information may include TSA information. Additionally, for example, the control information may be received based on a resource/channel configured for communication between the Rx entity and the Tx entity. In step S1020, the Rx entity may perform beam forming based on the TSA information included in the control information. For example, a beam determined based on the beam forming may be a beam for receiving a sensing RS. In this case, for example, a width or a direction of the beam for receiving the sensing RS may be configured based on the TSA information. In step S1030, the Rx entity may receive the sensing RS transmitted by the Tx entity. For example, the sensing RS may be transmitted to TSA by the Tx entity, reflected from the TSA, and received by the Rx entity. Additionally, for example, the sensing RS may be transmitted by the Tx entity and received by the Rx entity based on a resource/channel other than a resource/channel for transmission and reception of the control information in step S1010 described above. For example, the Rx entity may receive the sensing RS through the beam determined based on beam forming to receive the sensing RS in step S1020 described above. In step S1040, the Rx entity may perform sensing for TSA based on the received sensing RS.

Meanwhile, it is necessary to define an operation of performing sensing in all directions without designating TSA.

In the present disclosure, a method for performing bi-static sensing in all directions without designating TSA is proposed.

For example, in the case of all-direction bi-static sensing in which UE#1 and/or BS#1 transmits a sensing RS, UE#2 and/or BS#2 receives a signal in which the sensing RS is reflected by an object, and a sensing operation is performed based on measurement of the received sensing RS, the UE#1 and/or the UE#2 and/or the BS#1 and/or the BS#2 may perform all-direction bi-static sensing through the following operation.

For example, a Tx entity transmitting a sensing RS may transmit the sensing RS in all directions around the Tx entity without performing beam forming-based transmission of the sensing RS in a specific TSA direction. For example, the Tx entity may be a BS or a UE.

For example, an Rx entity may receive the sensing RS transmitted by the Tx entity and reflected by an object, perform measurement on the received sensing RS, and perform the all-direction sensing. For example, the Rx entity may be a BS or a UE.

For example, when a BS transmits a sensing RS, the following may be applied. For example, a Tx BS may transmit its BS ID information while transmitting a sensing RS. For example, the BS ID may be a cell ID. Alternatively, for example, when the Tx BS is a TRP, the BS ID may be a TRP ID. For example, the BS ID may be transmitted through a control channel related to the sensing RS. For example, the BS ID may be transmitted through a parameter related to the sensing RS. For example, the parameter related to the sensing RS may be a sequence ID related to generating the sensing RS. For example, the parameter related to the sensing RS may be a cyclic shift value related to generating the sensing RS. For example, a BS and/or UE, which is an Rx entity that has received the reflected sensing RS, may report a sensing result measured for the sensing RS to the BS that has transmitted the sensing RS and/or SMF. For example, the report may include a BS ID (e.g., cell ID or TRP ID) of the BS that has transmitted the sensing RS, and a BS ID (e.g., cell ID or TRP ID) and/or UE ID (e.g., source ID) of the BS and/or UE, which is the Rx entity.

For example, when a UE transmits a sensing RS, the following may be applied. For example, a Tx UE may transmit its UE ID information while transmitting a sensing RS. For example, the UE ID information may be transmitted through a control channel related to the sensing RS. For example, the UE ID may include C_RNTI information configured by a base station with which the Tx UE establishes an RRC_CONNECTED_MODE state. For example, the UE ID may be a source ID used by the Tx UE to establish a PC5 connection and perform SL communication. For example, the control channel related to the sensing RS may be transmitted earlier than the sensing RS by a threshold time. For example, the UE ID may be transmitted through a parameter related to the sensing RS. For example, the parameter related to the sensing RS may be a sequence ID related to generating the sensing RS. For example, the parameter related to the sensing RS may be a cyclic shift value related to generating the sensing RS. For example, a BS and/or UE, which is an Rx entity that has received the reflected sensing RS, may report a sensing result based on a value measured for the sensing RS to the UE that has transmitted the sensing RS and/or SMF. For example, the report may include a UE ID of the UE that has transmitted the sensing RS and a BS and/or UE ID which is the Rx entity.

For example, whether the rule is applied and/or the parameter value related to the proposed method/rule may be configured/allowed specifically (or differently or independently) for a service type. For example, whether the rule is applied and/or the parameter value related to the proposed method/rule may be configured/allowed specifically (or differently or independently) for a (LCH or service) priority. For example, whether the rule is applied and/or the parameter value related to the proposed method/rule may be configured/allowed specifically (or differently or independently) for a QoS requirement (e.g., latency, reliability, minimum communication range). For example, whether the rule is applied and/or the parameter value related to the proposed method/rule may be configured/allowed specifically (or differently or independently) for a PQI parameter. For example, whether the rule is applied and/or the parameter value related to the proposed method/rule may be configured/allowed specifically (or differently or independently) for SL HARQ feedback enabled LCH/MAC PDU (transmission). For example, whether the rule is applied and/or the parameter value related to the proposed method/rule may be configured/allowed specifically (or differently or independently) for SL HARQ feedback disabled LCH/MAC PDU (transmission). For example, whether the rule is applied and/or the parameter value related to the proposed method/rule may be configured/allowed specifically (or differently or independently) for a CBR measurement value of a resource pool. For example, whether the rule is applied and/or the parameter value related to the proposed method/rule may be configured/allowed specifically (or differently or independently) for a SL cast type (e.g., unicast, groupcast, broadcast). For example, whether the rule is applied and/or the parameter value related to the proposed method/rule may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the parameter value related to the proposed method/rule may be configured/allowed specifically (or differently or independently) for a SL mode 1 CG type (e.g., SL CG type 1 or SL CG type 2). For example, whether the rule is applied and/or the parameter value related to the proposed method/rule may be configured/allowed specifically (or differently or independently) for a SL mode type (e.g., mode 1 or mode 2). For example, whether the rule is applied and/or the parameter value related to the proposed method/rule may be configured/allowed specifically (or differently or independently) for a resource pool. For example, whether the rule is applied and/or the parameter value related to the proposed method/rule may be configured/allowed specifically (or differently or independently) for whether a PSFCH resource is configured in a resource pool. For example, whether the rule is applied and/or the parameter value related to the proposed method/rule may be configured/allowed specifically (or differently or independently) for a source (L2) ID. For example, whether the rule is applied and/or the parameter value related to the proposed method/rule may be configured/allowed specifically (or differently or independently) for a destination (L2) ID. For example, whether the rule is applied and/or the parameter value related to the proposed method/rule may be configured/allowed specifically (or differently or independently) for a PC5 RRC connection link. For example, whether the rule is applied and/or the parameter value related to the proposed method/rule may be configured/allowed specifically (or differently or independently) for a SL link. For example, whether the rule is applied and/or the parameter value related to the proposed method/rule may be configured/allowed specifically (or differently or independently) for a connection state (with a base station) (e.g., RRC CONNECTED state, IDLE state, INACTIVE state). For example, whether the rule is applied and/or the parameter value related to the proposed method/rule may be configured/allowed specifically (or differently or independently) for a SL HARQ process (ID). For example, whether the rule is applied and/or the parameter value related to the proposed method/rule may be configured/allowed specifically (or differently or independently) for whether to perform SL DRX operation (of TX UE or RX UE). For example, whether the rule is applied and/or the parameter value related to the proposed method/rule may be configured/allowed specifically (or differently or independently) for whether a UE is a power saving (TX or RX) UE. For example, whether the rule is applied and/or the parameter value related to the proposed method/rule may be configured/allowed specifically (or differently or independently) for a case in which PSFCH TX and PSFCH RX (and/or a plurality of PSFCH TXs (exceeding UE capability)) overlap (and/or a case in which PSFCH TX (and/or PSFCH RX) is skipped) (from a specific UE perspective). For example, whether the rule is applied and/or the parameter value related to the proposed method/rule may be configured/allowed specifically (or differently or independently) for a case in which the RX UE actually (successfully) receives PSCCH (and/or PSSCH) (re)transmission from the TX UE.

For example, in the present disclosure, the term "configured/configuration (or designated/designation)" can be extended/interpreted to/as that the base station informs the UE through a pre-defined (physical layer or higher layer) channel/signal (e.g., SIB, RRC, MAC CE) (and/or being provided through pre-configuration and/or that the UE informs other UEs through a pre-defined (physical layer or higher layer) channel/signal (e.g., SL MAC CE, PC5 RRC)).

For example, in the present disclosure, the term "PSFCH" can be extended/interpreted to/as (NR or LTE) PSSCH (and/or (NR or LTE) PSCCH) (and/or (NR or LTE) SL SSB (and/or UL channel/signal)). In addition, the proposed methods of the present disclosure can be used in combination with each other (as a new type of manner).

For example, in the present disclosure, the specific threshold may refer to a threshold pre-defined or (pre-)configured by a higher layer (including an application layer) of the network, the base station, or the UE. For example, in the present disclosure, the specific configured value may refer to a value pre-defined or (pre-)configured by a higher layer (including an application layer) of the network, the base station, or the UE. For example, the operation configured by the network/base station may refer to that the base station (pre-)configures to the UE through higher layer RRC signaling or the base station configures/signals to the UE through MAC CE or the base station signals to the UE through DCI.

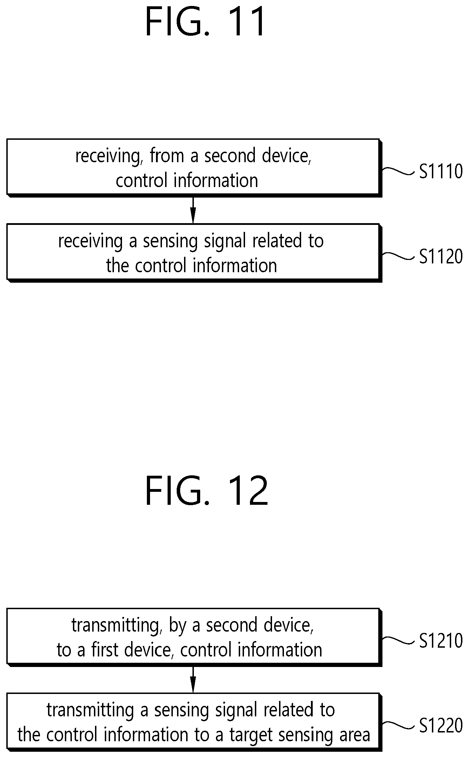

FIG. 11 shows a method for performing wireless communication by a first device, based on an embodiment of the present disclosure. The embodiment of FIG. 11 may be combined with various embodiments of the present disclosure.

Referring to FIG. 11, in step S1110, a first device may receive, from a second device, control information. In step S1120, the first device may receive a sensing signal related to the control information. For example, the control information may include information related to a target sensing area.

For example, the sensing signal may be received, by the first device, based on the information related to the target sensing area.

For example, a beam configuration for receiving the sensing signal may be performed based on the information related to the target sensing area.

For example, a direction of a beam for receiving the sensing signal may be configured based on the information related to the target sensing area.

For example, a width of a beam for receiving the sensing signal may be configured based on the information related to the target sensing area.

For example, the sensing signal may be transmitted through a beam determined based on a beam forming of the second device. For example, a width of the beam related to the transmission of the sensing signal may be determined based on a direction from the second device to the first device. For example, a width of the beam related to the transmission of the sensing signal may be determined based on the target sensing area. For example, a width of the beam related to the transmission of the sensing signal may be determined based on the target sensing area related to a direction from the second device to the first device. For example, a width of the beam related to the transmission of the sensing signal may be determined based on (i) a direction from the second device to the first device and (ii) the target sensing area related to the direction from the second device to the first device. For example, a width of the beam related to the transmission of the sensing signal may be determined based on beam configuration information transmitted along with information for requesting the sensing signal transmitted from the first device to the second device. For example, a width of the beam related to the transmission of the sensing signal may be determined based on information related to a resource pool for the transmission of the sensing signal.

For example, the sensing signal transmitted by the second device may be received, by the first device, by being reflected from the target sensing area.

For example, the control information may include at least one of identifier (ID) of the first device, ID of a base station related to the first device, ID of a cell related to the first device, or ID of a transmission and reception point (TRP) related to the first device.

Additionally, for example, the first device may report, to the second device, a sensing result related to the received sensing signal. For example, the sensing result may include at least one of first ID related to the first device or second ID related to the second device.

The proposed method may be applied to devices according to various embodiments of the present disclosure. First, a processor 102 of a first device 100 may control a transceiver 106 to receive, from a second device, control information. And, the processor 102 of the first device 100 may control the transceiver 106 to receive a sensing signal related to the control information. For example, the control information may include information related to a target sensing area.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: receiving, from a second device, control information; and receiving a sensing signal related to the control information. For example, the control information may include information related to a target sensing area.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: receiving, from a second device, control information; and receiving a sensing signal related to the control information. For example, the control information may include information related to a target sensing area.

According to one embodiment of the present disclosure, provided is a non-transitory computer-readable storage medium recording instructions. For example, the instructions, based on being executed, cause a first device to perform operations comprising: receiving, from a second device, control information; and receiving a sensing signal related to the control information. For example, the control information may include information related to a target sensing area.

FIG. 12 shows a method for performing wireless communication by a second device, based on an embodiment of the present disclosure. The embodiment of FIG. 12 may be combined with various embodiments of the present disclosure.

Referring to FIG. 12, in step S1210, a second device may transmit, to a first device, control information. In step S1220, the second device may transmit a sensing signal related to the control information to a target sensing area. For example, the control information may include information related to the target sensing area.

The proposed method may be applied to devices according to various embodiments of the present disclosure. First, a processor 202 of a second device 200 may control a transceiver 206 to transmit, to a first device, control information. And, the processor 202 of the second device 200 may control the transceiver 206 to transmit a sensing signal related to the control information to a target sensing area. For example, the control information may include information related to the target sensing area.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: transmitting, to a first device, control information; and transmitting a sensing signal related to the control information to a target sensing area. For example, the control information may include information related to the target sensing area.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: transmitting, to a first device, control information; and transmitting a sensing signal related to the control information to a target sensing area. For example, the control information may include information related to the target sensing area.

According to one embodiment of the present disclosure, provided is a non-transitory computer-readable storage medium recording instructions. For example, the instructions, based on being executed, cause a second device to perform operations comprising: transmitting, to a first device, control information; and transmitting a sensing signal related to the control information to a target sensing area. For example, the control information may include information related to the target sensing area.

According to various embodiments of the present disclosure, sensing may be efficiently performed based on designating an Rx entity receiving a sensing RS. Additionally, according to various embodiments of the present disclosure, information related to TSA may be provided to the Rx entity based on a resource/channel for communication. Specifically, for example, a Tx entity may include information related to TSA in control information (or a control channel) transmitted to perform communication with the Rx entity, and may transmit the control information to the Rx entity, and the Rx entity may receive the control information (or the control channel) transmitted from the Tx entity and receive a sensing RS reflected and transmitted from TSA based on the information related to TSA included in the control information. In this case, for example, information related to TSA may be transmitted and received through control information (or a control channel) transmitted and received for existing communication without newly defining/configuring a channel/resource pool, etc. for providing information on TSA related to sensing to the Rx entity. Additionally, for example, since the Rx entity that has received the information related to TSA may perform operation(s) related to beam management, such as beam forming or beam selection, based on the information related to TSA, reception quality of the sensing RS may be improved. Additionally, for example, reliability of sensing performed using the sensing RS favorably received by the Rx entity through a beam determined based on the information related to TSA may be guaranteed.

According to various embodiments of the present disclosure, bi-static sensing may be efficiently performed in all directions even without designating TSA.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

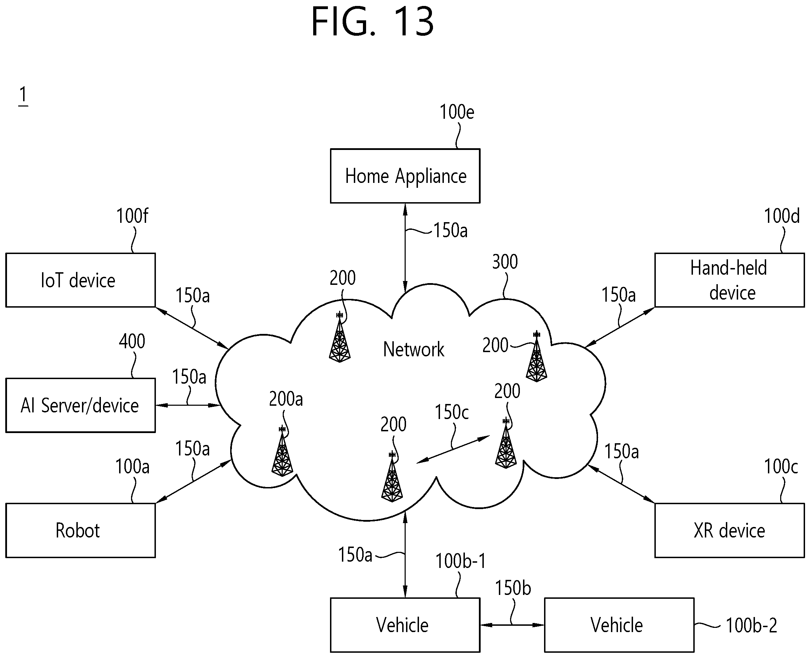

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

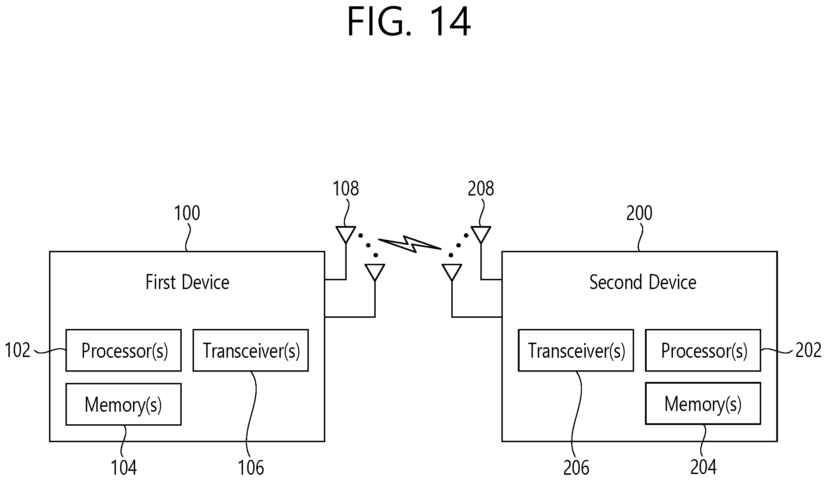

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cashe memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

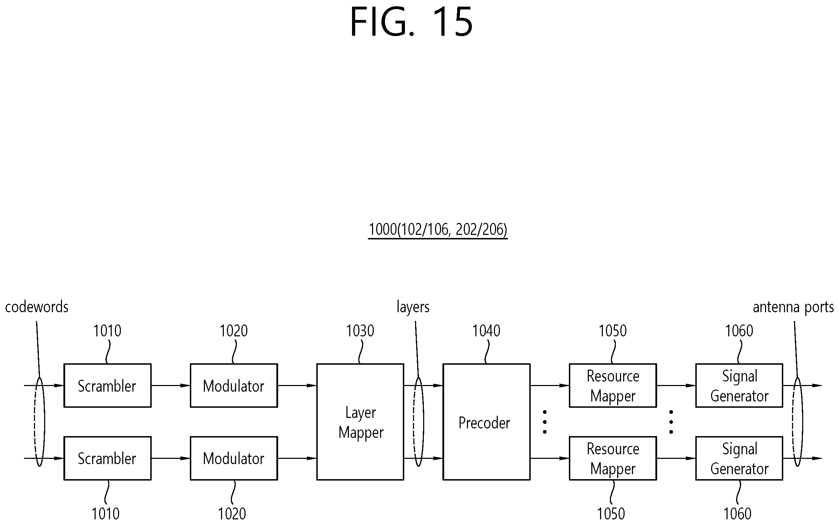

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

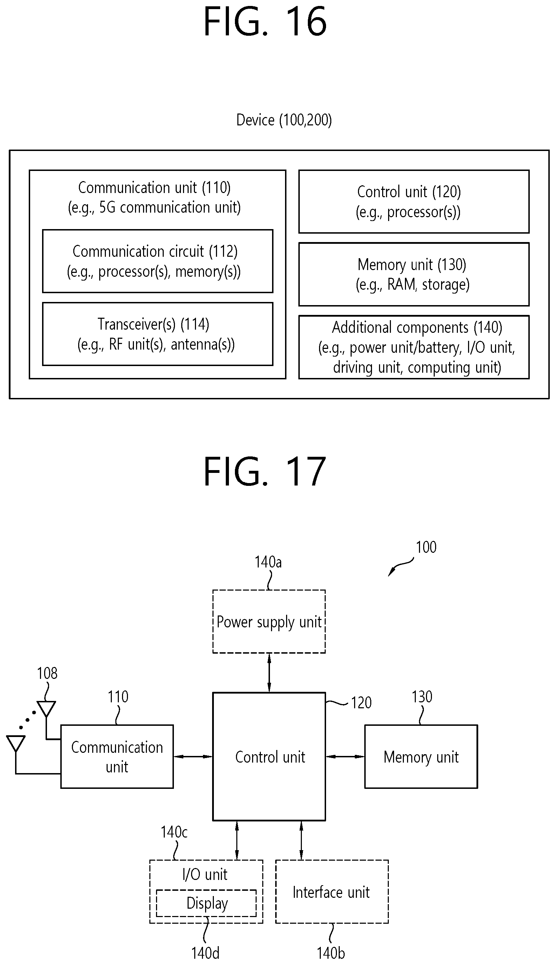

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

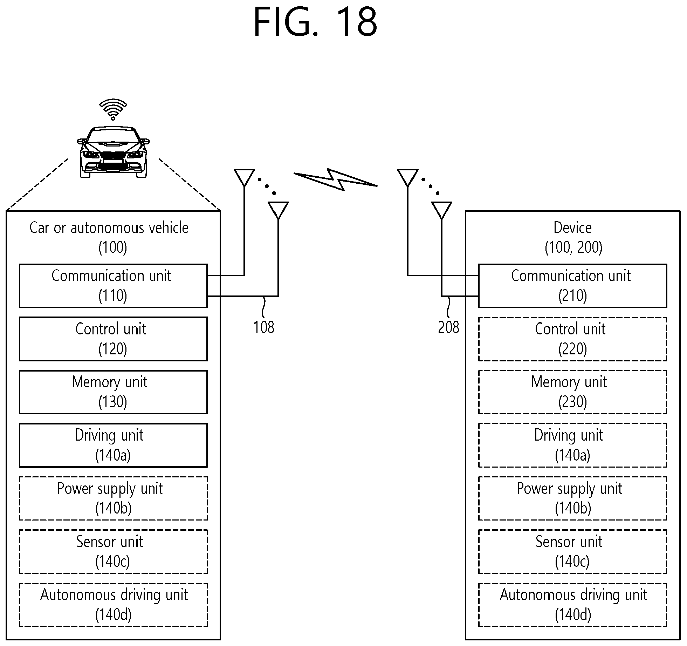

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
receiving, by a first device, from a second device, control information; and
receiving a sensing signal related to the control information,
wherein the control information includes information related to a target sensing area.

2. The method of claim 1,
wherein the sensing signal is received, by the first device, based on the information related to the target sensing area.

3. The method of claim 1,
wherein a beam configuration for receiving the sensing signal is performed based on the information related to the target sensing area.

4. The method of claim 1,
wherein a direction of a beam for receiving the sensing signal is configured based on the information related to the target sensing area.

5. The method of claim 1,
wherein a width of a beam for receiving the sensing signal is configured based on the information related to the target sensing area.

6. The method of claim 1,
wherein the sensing signal is transmitted through a beam determined based on a beam forming of the second device.

7. The method of claim 6,
wherein a width of the beam related to the transmission of the sensing signal is determined based on a direction from the second device to the first device.

8. The method of claim 6,
wherein a width of the beam related to the transmission of the sensing signal is determined based on the target sensing area.

9. The method of claim 6,
wherein a width of the beam related to the transmission of the sensing signal is determined based on beam configuration information transmitted along with information for requesting the sensing signal transmitted from the first device to the second device.

10. The method of claim 6,
wherein a width of the beam related to the transmission of the sensing signal is determined based on information related to a resource pool for the transmission of the sensing signal.

11. The method of claim 1,
wherein the sensing signal transmitted by the second device is received, by the first device, by being reflected from the target sensing area.

12. The method of claim 1,
wherein the control information includes at least one of identifier (ID) of the first device, ID of a base station related to the first device, ID of a cell related to the first device, or ID of a transmission and reception point (TRP) related to the first device.

13. The method of claim 1, further comprising:
reporting, to the second device, a sensing result related to the received sensing signal,
wherein the sensing result includes at least one of first ID related to the first device or second ID related to the second device.

14. A first device comprising:
at least one transceiver;
at least one processor; and
at least one memory connected to the at least one processor and storing instructions that, based on being executed by the at least one processor, cause the first device to perform operations comprising:
receiving, from a second device, control information; and
receiving a sensing signal related to the control information,
wherein the control information includes information related to a target sensing area.

15. A processing device comprising:
at least one processor; and
at least one memory connected to the at least one processor and storing instructions that, based on being executed by the at least one processor, cause the at least one processor to perform operations comprising:
receiving, from a second device, control information; and
receiving a sensing signal related to the control information,
wherein the control information includes information related to a target sensing area.

16. A non-transitory computer-readable storage medium recording instructions, the instructions, when executed, cause a first device to perform operations comprising:
receiving, from a second device, control information; and
receiving a sensing signal related to the control information,
wherein the control information includes information related to a target sensing area.

17. A method comprising:
transmitting, by a second device, to a first device, control information; and
transmitting a sensing signal related to the control information to a target sensing area,
wherein the control information includes information related to the target sensing area.

18. A second device comprising:
at least one transceiver;
at least one processor; and
at least one memory connected to the at least one processor and storing instructions that, based on being executed by the at least one processor, cause the second device to perform operations comprising:
transmitting, to a first device, control information; and
transmitting a sensing signal related to the control information to a target sensing area,
wherein the control information includes information related to the target sensing area.

19. A processing device comprising:
at least one processor; and
at least one memory connected to the at least one processor and storing instructions that, based on being executed by the at least one processor, cause the at least one processor to perform operations comprising:
transmitting, to a first device, control information; and
transmitting a sensing signal related to the control information to a target sensing area,
wherein the control information includes information related to the target sensing area.

20. A non-transitory computer-readable storage medium recording instructions, the instructions, when executed, cause a second device to perform operations comprising:
transmitting, to a first device, control information; and
transmitting a sensing signal related to the control information to a target sensing area,
wherein the control information includes information related to the target sensing area.
